**Europäisches Patentamt**

**European Patent Office**

**Office européen des brevets**

(11) Publication number: **0 121 360**
**B1**

# EUROPEAN PATENT SPECIFICATION

(45) Date of publication of patent specification: **06.06.90**

(51) Int. Cl.⁵: **G 01 V 3/30**

(21) Application number: **84301563.7**

(22) Date of filing: **08.03.84**

(54) **Electromagnetic borehole logging apparatus and method.**

(30) Priority: **31.03.83 US 480638**

(43) Date of publication of application:
**10.10.84 Bulletin 84/41**

(45) Publication of the grant of the patent:
**06.06.90 Bulletin 90/23**

(84) Designated Contracting States:
**DE FR GB**

(56) References cited:
**US-A-4 052 662**
**US-A-4 107 598**
**US-A-4 185 238**

(73) Proprietor: **TEXACO DEVELOPMENT CORPORATION**
**2000 Westchester Avenue**
**White Plains, New York 10650 (US)**

(72) Inventor: **Cox, Percy Terrell**
**5706 Wigton Street**
**Houston Texas 77096 (US)**
Inventor: **Warren, Wayne Ford**
**2554 Riata Lane**
**Houston Texas 77043 (US)**
Inventor: **Johnson, Donald Lloyd, Jr.**
**5904 Burgoyne No. 3**
**Houston Texas 77057 (US)**

(74) Representative: **Wood, Anthony Charles et al**
**Urquhart-Dykes & Lord 91 Wimpole Street**
**London W1M 8AH (GB)**

Courier Press, Leamington Spa, England.

**Description**

This invention relates to electromagnetic borehole logging, and in particular to an apparatus and method for determining the dielectric constant and/or resistivity of an earth formation in the vicinity of a borehole, the earth formation being subject to invasion of fluid such as a drilling fluid from the borehole.

The problem of electromagnetic investigation of earth formations in which there is a zone invaded by a drilling fluid from the borehole and a non-invaded zone, has been discussed in US—A—4185238. That patent discloses a dielectric and resistivity well logging system utilising a transmitter coil with four receiver coils spaced longitudinally from the transmitter coil and having spacings of 69 cms., 132 cms., 190 cms., and 254 cms. from the transmitter coil.

US—A—4185238 describes apparatus for determining the dielectric constant and/or resistivity of an earth formation in the vicinity of a borehole, the earth formation being subject to invasion of fluid from the borehole, said apparatus comprising:

means for transmitting electromagnetic energy into the earth formation from a first location in the borehole at a frequency which permits the electromagnetic energy to propagate through the surrounding earth formation;

means for receiving electromagnetic energy at a plurality of locations in the borehole spaced at different distances longitudinally apart from the transmitting means and for providing signals representative of the received electromagnetic energy at those locations; and

means for determining the dielectric constant and/or resistivity of said earth formation in accordance with said representative signals.

The present invention is characterized in that:

said means for receiving electromagnetic energy comprises three said receiving means and each said receiving means provides its said signal representative of the total electromagnetic field at its respective location; and

said determining means is operable to derive at least first and second derived signals respectively representative of secondary electromagnetic fields at two or more of said three locations from the respective signals representative of the total electromagnetic field at those locations, said secondary electromagnetic fields produced by eddy currents in the surrounding earth formation, and to determine the dielectric constant and/or resistivity in accordance with said representative signals and said derived signals.

The present invention also provides a well logging method as set forth in claim 8.

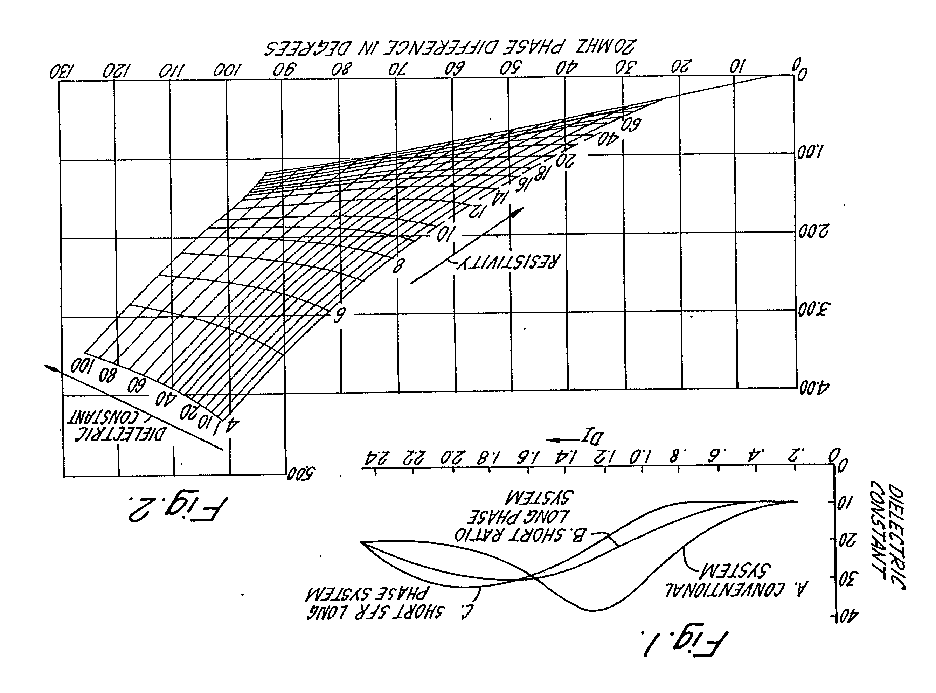

Our co-pending Patent Application EP—A—0121359 discloses a logging system using one transmitter and three receiver coils and which provides substantially the same information as the aforementioned US Patent but with fewer elements. The system of our co-pending Application is referred to as the short ratio, long phase system. The present invention permits improvements over the short ratio, long phase system by increasing the depth of investigation, as will be described below in connection with Figure 1.

An embodiment of the invention will now be described, by way of example, with reference to the accompanying drawings, in which:—

Figure 1 is a plot of the response of a well logging tool constructed in accordance with the present invention along with the response of the well logging tool of a prior art system and the response of a short ratio, long phase well logging system.

Figure 2 is a graphical plot of a secondary field ratio versus phase difference for a well logging system constructed in accordance with an embodiment of the present invention.

Figure 3 is a simplified block diagram of a short ratio, long phase well logging system constructed in accordance with the present invention.

The short ratio, long phase system may be improved upon to increase the depth of investigation, as shown in Figure 1, by making a secondary field ratio (SFR) measurement in place of the total field amplitude ratio. The total field signals at each receiver coil consist of contributions from both a primary and a secondary electromagnetic field. The primary field is that part of the received signal which results directly from the electromagnetic field generated by the transmitter coil. The transmitted electromagnetic field also excites eddy currents in the surrounding formation. These eddy currents consist of both conductive and displacement currents. The displacement current density is proportional to the dielectric constant of the surrounding material, while the conductive current density is proportional to the conductivity of the surroundiong material. Both the conductive and displacement currents are themselves a source of an electromagnetic field, which is called the secondary field.

The present invention determines the primary field with the sonde located in air and then uses this signal to cancel out the primary field part of the total field so that only the secondary field is being measured. The results of this technique are shown in Figure 1 and it can be seen that this method is considerably less affected by invasion than the aforementioned short ratio, long phase system.

A plot utilising the short-spaced secondary field ratio, long-spaced phase method is shown in Figure 2. This plot relates the 20 megahertz secondary field ratio and the 20 megahertz phase difference measurements to the formation resistivity and dielectric constant values.

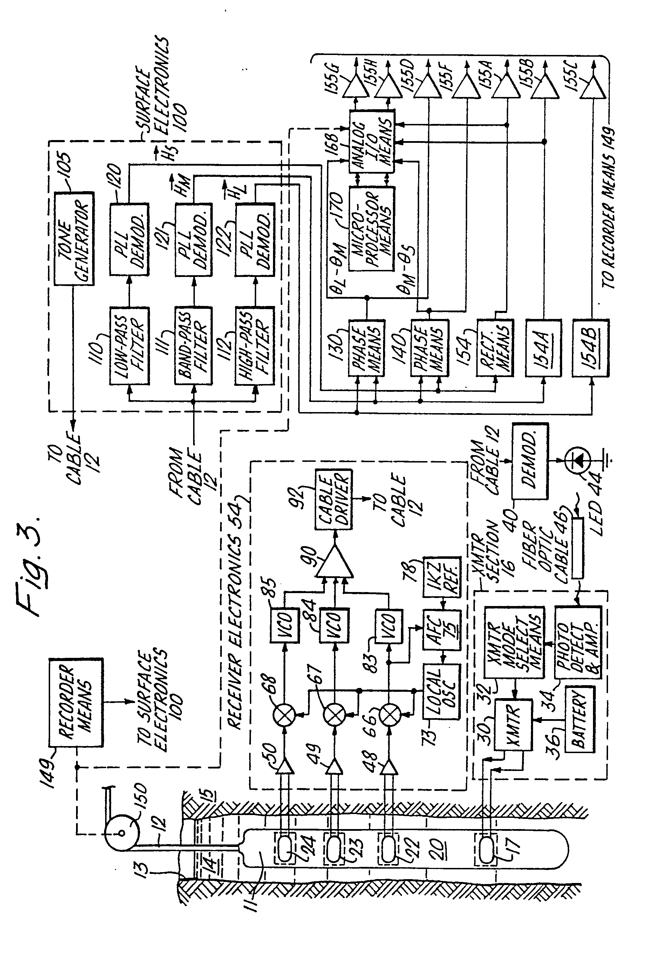

Referring now to Figure 3, a well logging sonde 11 whose main body member is preferably constructed of fiberglass or some other non-conductive material of sufficient strength characteristics, is shown suspended by a well logging cable 12 in an uncased well borehole 13 filled with borehole fluid 14 and is surrounded by earth formations 15 whose dielectric constant and resistivity properties are to be measured. Within the lower portion of the well logging sonde 11 is housed a transmitter electronic section 16 and an associated transmitting coil 17. Transmitting coil 17 is a wire wound on a non-conducting machinable ceramic material. Transmitting coil 17 is energised at a preferred frequency of 20 megahertz as hereinafter described, to transmit electromagnetic energy into earth formations 15. Receiver coils 22, 23 and 24 which are helically wound on machinable ceramic forms comprise tuned resonant circuits which are sensitive to a frequency of 20 megahertz. Receiver coils 22, 23 and 24 are located at 61, 102 and 142 cms., respectively, from transmitter coil 17 in sonde 11. Transmitter coil 17 and receiver coils 22, 23 and 24 are electrostatically shielded as indicated by the dotted line boxes around the coils. The coil spacings just recited are intended as being illustrative only and it will be appreciated by those skilled in the art that other operating frequencies in the range of interest for practicing the invention and other coil spacings than these may be used without departing from the inventive concept.

Transmitter section 16 includes a transmitter 30 which may be in an off state, a lower power operational state, or a high power operational state as determined by an operator. Transmitter 30 is used to energise transmitter coil 17. Transmitter section 16 includes also transmitter mode select means 32 which provides a control signal to transmitter 30, to control the state of transmitter 30, in response from a signal from a photo detector and amplifier 34. Transmitter 30 is energised by DC voltage from battery 36. An operator at the surface determines the transmitter mode and provides, as hereinafter explained, a modulated signal down well logging cable 12 to a demodulator 40 located in the upper section of sonde 11 which demodulates the signal and provides it to a light emitting diode 44. Light emitting diode 44 provides a corresponding light output through a fiber optic cable 46 which passes through the coils 17, 22, 23 and 24 and is then converted back into an electrical signal by photo detector and amplifier 34 located in transmitter section 16. The purpose of using fiber optic cabling is to allow the state of transmitter 30 to be controlled without creating electromagnetic interference in receiver coils 22, 23 and 24.

The signals from coils 22, 23 and 24 are provided to amplifiers 48, 49 and 50, respectively, of receiver electronics 54. The output of receivers 48, 49 and 50 are provided to RF mixers 66, 67 and 68, respectively, where the 20 megahertz signals are heterodyned to a lower frequency preferably 1 kilohertz by action of a local oscillator 73. An automatic frequency control circuit 75 maintains the intermediate frequency locked to a frequency of 1 kilohertz reference signal provided by a 1 kilohertz reference source 78. The outputs of mixers 66, 67 and 68 are provided to voltage controlled oscillators 83, 84 and 85, respectively, which converts the mixers' signals to frequency modulated signals.

Voltage controlled oscillators 83, 84 and 85 provide frequency modulated signals having carrier frequencies of 20, 45 and 86 kilohertz, respectively. These carrier frequencies were chosen to provide adequate separation of the modulated carriers to allow for low pass, high pass and band pass filtering at the surface and further to fall within the maximum transmission capability of the logging cable. The frequency modulated signals provided by voltage controlled oscillators 83, 84 and 85 are provided to summing amplifier means 90 where they are summed and provided to a cable driver 92. Cable driver 92 provides the sum signal from summing means 90 to cable 12 which conducts it uphole to the surface electronics 100 on the surface.

As noted earlier, transmitter 30 may be in any one of three states. The transmitter operational state is selected at the surface to allow high power operation of transmitter 16 only while actual logging and calibrations are in process. This permits the standard battery back to operate within its power capabilities while providing a factor of 10 increase in transmitter input power during logging. Transmitter 30 state is selected by sending a dual tone signal from tone generator 105 of surface electronics 100 to cable 12 where it is conducted downhole to demodulator 40 in sonde 11. As explained previously in the discussion of transmitter section 16, the signals are then conveyed to photo detector 34 via fiber optic cable and thence to transmitter mode select 32 which controls the mode of transmitter 30.

Surface electronics 100 also includes a low pass filter 110, a band pass filter 111, and a high pass filter 112 which filters the signal from cable 12 to provide reproductions of the signals from voltage control oscillators 83, 84 and 85, respectively to phase locked loop demodulators 120, 121 and 122, respectively. The output of phase locked loop demodulators 120, 121 and 122 are reproductions of the signals provided by receiver coils 22, 23 and 24, respectively, each signal having a frequency of 1 kilohertz.

The signals from phase locked loop demodulators 120, 121 and 122 are provided to phase means 130 and 140 which provide a signal representative of the phase differences between the signals received by coils 23 and 24 and by coils 22 and 23, respectively.

Phase locked loop demodulators 120, 121 and 122 provide their output signals also to rectifier means 154, 154A, and 154B, respectively. The outputs of phase means 130 and 140 and rectifier means 154 and 154A are provided to an analog input/output means 168. Analog input/output means 168 provides them as digital signals to microprocessor means 170. Analog input/output means 178 receives pulses from sheave wheel 150 and provides corresponding digital signals to microprocessor means 170 where depth shifting of data may be done if so desired. Microprocessor means 170 provides digital signals to analog input/output means 168, representative of the dielectric constant and of the resistivity of the earth formations, which in turn provides analog signals. The signals from rectifier means 154, 154A and 154B; from phase means 130 and 140; and from analog input/output means 168 are provided to amplifiers 155A, 155B, 155C, 155D, 155F, 155G and 155H; which amplifies the signals and provides them to recorder means 149.

Microprocessor means 170 performs the calculation of SFR and then uses this value together with the $\theta_L - \theta_M$ phase difference to calculate the dielectric constant value. The SFR is calculated in the following manner:

$$SFR = |\overrightarrow{H_M} - \overrightarrow{H_S}| / |\overrightarrow{H_M}| \tag{1}$$

where SFR is the magnitude of the secondary field ratio and $H_M$ and $H_S$ are the field strength values at the medium and short-spaced demodulator outputs. These signals are proportional to the original signals at the medium-spaced and short-spaced receiver coils, respectively. The field strength amplitudes are normally measured relative to their values in air. Thus equation (1) becomes:

$$SFR = [ (\overrightarrow{H_M}/\overrightarrow{A_M}) - (\overrightarrow{H_S}/\overrightarrow{A_S})] / (\overrightarrow{H_M}/\overrightarrow{A_M}) \tag{2}$$

where $A_M$ and $A_S$ are the values of the electromagnetic field strength in air at the medium-spaced and short-spaced receiver coils, respectively. This can be reduced to the form:

$$SFR = |1 - (\overrightarrow{A_M}\overrightarrow{H_S}/\overrightarrow{A_S}\overrightarrow{H_M})| \tag{3}$$

Solving for the magnitude of (3) gives:

$$SFR = \sqrt{1 - 2F \, Cos(-P + 1°) + F^2} \tag{4}$$

where $F = \dfrac{|\overrightarrow{A_M}|}{|\overrightarrow{A_S}|} \cdot \dfrac{|\overrightarrow{H_S}|}{|\overrightarrow{H_M}|}$ and $P = \theta M - \theta S$.

The 1° phase angle results from the phase shift in air between the medium and short spaced receiver coils.

The microprocessor 170 is programmed to solve equation (4). The system is calibrated by placing sonde 11 in air and adjusting the $\theta_M - \theta_S$ phase value to 1° and the SFR to zero. In equation (4), this is accomplished by setting P=1 degree and F=1. The factor F is adjusted by varying the d.c. output of the rectifier means 154 in the short channel.

Microprocessor means 170 combines the SFR data calculated from the electromagnetic fields at the medium and short-spaced coils with the phase difference data measured between the long and medium-spaced coils. This is done by programming microprocessor means 170 to interpret the crossplot shown in Figure 2. This crossplot relates the measured values of SFR and phase difference to the formation electrical parameters of resistivity and dielectric constant. The crossplot represents the solution of the Helmholtz wave equation in a cylindrical geometry for the coil spacings, frequency and borehole parameters chosen. The phase measurement is depth-shifted by microprocessor means 170 to align the two measure points vertically.

The transmitting coil 17 is preferably energised at a frequency in the range of from 10 to 60 megahertz, preferably 20 megahertz as described above.

The present invention hereinbefore described is a resistivity and dielectric constant measurement method and apparatus using secondary field ratio measurement as well as a phase shift measurement. It should be noted that although the phase differences have been described above as being derived from the total fields received by receiver coils 22, 23 and 24, the phase differences may be as easily derived from the secondary fields of the total fields received by receiver coils 22, 23 and 24. There is no substantial difference in the result of phase difference measurement by the alternative routes.

**Claims**

1. Apparatus for determining the dielectric constant and/or resistivity of an earth formation (15) in the vicinity of a borehole (13), the earth formation being subject to invasion of fluid (14) from the borehole, said apparatus comprising:

means (16, 17) for transmitting electromagnetic energy into the earth formation from a first location in the borehole at a frequency which permits the electromagnetic energy to propagate through the surrounding earth formation;

means (22, 23, 24) for receiving electromagnetic energy at a plurality of locations in the borehole spaced at different distances longitudinally apart from the transmitting means (16, 17) and for providing signals representative of the received electromagnetic energy at those locations; and

means (54, 100) for determining the dielectric constant and/or resistivity of said earth formation in accordance with said representative signals;

characterized in that:

said means (22, 23, 24) for receiving electromagnetic energy comprises three said receiving means and

EP 0 121 360 B1

each said receiving means provides its said signal representative of the total electromagnetic field at its respective location; and

said determining means (54, 100) is operable to derive at least first and second derived signals respectively representative of secondary electromagnetic fields at two or more of said three locations from the respective signals representative of the total electromagnetic field at those locations, said secondary electromagnetic fields produced by eddy currents in the surround earth formation, and to determine the dielectric constant and/or resistivity in accordance with said representative signals and said derived signals.

2. Apparatus according to claim 1 characterized in that the determining means (54, 100) includes:

secondary field ratio means (140, 154, 154A, 168, 170) for deriving the ratio of the magnitudes of the secondary electromagnetic fields at the two (22, 23) of said three receiving locations nearest the transmitting means (16, 17), and

first phase difference means (130) for deriving the phase difference between said signals provided by the respective said receiving means (23, 24) at the two of said three locations furthest away from the transmitting means (16, 17).

3. Apparatus according to claim 1 characterized in that the determining means (54, 100) includes:

secondary field ratio means (140, 154, 154A, 168, 170) for deriving the ratio of the magnitudes of the secondary electromagnetic fields at the two (22, 23) of said three receiving locations nearest the transmitting means (16, 17), and

first phase difference means for deriving the phase difference between the derived signals representative of the secondary electromagnetic fields at the two of said three locations furthest away from the transmitting means (16, 17).

4. Apparatus according to claim 2 or claim 3 characterized in that said secondary field ratio means 140, 154, 154A, 168, 170) includes second phase difference means (140) for deriving the phase difference between said signals provided by the respective said receiving means (22, 23) at the two of said three receiving locations nearest to the transmitting means (16, 17).

5. Apparatus according to claim 2 or claim 3 characterized in that said secondary field ratio means (140, 154, 154, 168, 170) includes second phase difference means for deriving the phase difference between the derived signals representative of the secondary electromagnetic fields at the two of said three locations nearest the transmitting means (16, 17).

6. Apparatus according to claim 4 or claim 5 characterized in that said determining means (54, 100) includes means (168, 170) for determining the resistivity and the dielectric constant of the earth formation in accordance with the derived secondary field ratio and the phase differences.

7. Apparatus according to any one of claims 1 to 6 characterized in that the frequency of the electromagnetic energy transmitted by said transmitting means (16, 17) lies within the range of from 10 megahertz to 60 megahertz.

8. A well logging method for determining the dielectric constant and/or resistivity of an earth formation (15) in the vicinity of a borehole (13), the earth formation being subject to invasion of fluid (14) from the borehole, said method comprising:

transmitting electromagnetic energy into the earth formation from a first location in the borehole at a frequency which permits the electromagnetic energy to propagate through the surrounding earth formation;

receiving electromagnetic energy at a plurality of locations in the borehole spaced at different distances longitudinally apart from the transmitting means (16, 17) and for providing signals representative of the received electromagnetic energy at those locations; and

determining the dielectric constant and/or resistivity of said earth formation in accordance with said representative signals;

characterized by:

receiving said electromagnetic energy at three said locations and providing each said signal representative of the total electromagnetic field at the respective location; and

said determining step includes deriving at least first and second derived signals respectively representative of secondary electromagnetic fields at two or more of said three locations from the respective signals representative of the total electromagnetic field at those locations, said secondary electromagnetic fields produced by eddy currents in the surrounding earth formation, and determining the dielectric constant and/or resistivity in accordance with said representative signals and said derived signals.

9. A method according to claim 8 characterized in that the determining step includes:

deriving the ratio of the magnitudes of the secondary electromagnetic fields at the second and third locations, and

deriving a first phase difference between the signals provided from the third and fourth locations.

10. A method according to claim 8 characterized in that the determining step includes:

deriving the ratio of the magnitudes of the secondary electromagnetic fields at the second and third locations, and

deriving a first phase difference between the derived signals representative of the secondary electromagnetic fields at the third and fourth locations.

5

11. A method according to claim 9 or claim 10 characterized in that the step of deriving the magnitude ratio includes deriving a second phase difference between the signals provided from the second and third locations.

12. A method according to claim 9 or claim 10 characterized in that the step of deriving the magnitude ratio includes deriving a second phase difference between the derived signals representative of the secondary electromagnetic fields at the second and third locations.

13. A method according to claim 11 or claim 12 characterized in that the determining step includes providing signals representative of the resistivity and dielectric constant of the earth formation in accordance with the derived secondary field ratio and the phase differences.

14. A method according to any one of claims 8 to 13 characterized in that the transmitting frequency lies in the range of from 10 to 60 megahertz.

**Patentansprüche**

1. Vorrichtung zum Bestimmen der Dielektrizitätskonstante und/oder des Widerstandes einer Erdformation (15) in der Nachbarschaft eines Bohrloches (13), wobei in die Erdformation Fluid (14) von dem Bohrloch eingebrochen ist, wobei die Vorrichtung umfaßt:

Mittel (16, 17) zum Senden elektromagnetischer Energie in die Erdformation von einer ersten Stelle in dem Bohrloch mit einer Frequenz, die es der elektromagnetischen Energie erlaubt, die umgebenden Erdformation zu durchdringen;

Mittel (22, 23, 24) zum Empfangen elektromagnetischer Energie an mehreren Stellen in dem Bohrloch, beabstandet mit verschiedenen longitudinalen Entfernungen weg von der Sendeeinrichtung (16, 17) und zum Erzeugen von Signalen, welche der empfangenen elektromagnetischen Energie an diesen Stellen entsprechen; und

Mittel (54, 100) zum Feststellen der dielektrischen Konstante und/oder des Widerstandes der Erdformation in Übereinstimmung mit den entsprechenden Signalen; dadurch gekennzeichnet, daß: die Mittel (22, 23, 24) zum Empfangen der elektromagnetischen Energie drei Empfangseinrichtungen umfassen und jede Empfangseinrichtung ihr dem gesamten elektromagnetischen Feld an ihrer entsprechenden Stelle entsprechendes Signal angibt; und

die Feststellungsmittel (54, 100) so betreibbar sind, daß sie mindestens erste und zweite abgeleitete Signale ableiten, die jeweils sekundären elektromagnetischen Feldern an zwei oder mehr der drei Stellen entsprechen, und zwar von den jeweiligen, dem gesamten elektromagnetischen Feld entsprechenden Signalen an diesen Stellen, wobei die sekundären elektromagnetischen Felder von Wirbelströmen in der umgebenden Erdformation erzeugt werden, und daß sie die Dielektrizitätskonstante und/oder den Widerstand in Übereinstimmung mit den jeweiligen Signalen und den abgeleiteten Signalen feststellen.

2. Vorrichtung nach Anspruch 1, dadurch gekennzeichnet, daß die Feststellungsmittel (54, 100) folgendes umfassen:

Sekundärfeld-Verhältnismittel (140, 154, 154A, 168, 170) zum Ableiten des Verhältnisses der Größen der sekundären elektromagnetischen Felder an denjenigen beiden (22, 23) der drei Empfangsstellen, die den Sendeeinrichtungen (16, 17) am nächsten sind, und erste Phasendifferenzmittel (130) zum Ableiten der Phasendifferenz zwischen denjenigen Signalen, die von den entsprechenden Empfangseinrichtungen (23, 24) an denjenigen beiden der drei Stellen abgegeben werden, die am weitesten von den Sendeeinrichtungen (16, 17) entfernt sind.

3. Vorrichtung nach Anspruch 1, dadurch gekennzeichnet, daß die Feststellungsmittel (54, 100) folgendes umfassen:

Sekundärfeld-Verhältnismittel (140, 154, 154A, 168, 170) zum Ableiten des Verhältnisses der Größen der sekundären elektromagnetischen Felder an denjenigen beiden (22, 23) der drei Empfangsstellen, die den Sendeeinrichtungen (16, 17 am nächsten sind, und erste Phasendifferenzmittel zum Ableiten der Phasendifferenz zwischen denjenigen abgeleiteten Signalen, die den sekundären elektromagnetischen Feldern an denjenigen beiden der drei Stellen entsprechenden, die am weitesten von den Sendeeinrichtungen (16, 17) entfernt sind.

4. Vorrichtung nach Anspruch 2 oder 3, dadurch gekennzeichnet, daß die Sekundärfeld-Verhältnismittel (140, 154, 154A, 168, 170) zweite Phasendifferenzmittel (140) umfassen zum Ableiten der Phasendifferenz zwischen den von den entsprechenden Empfangseinrichtungen (22, 23) an denjenigen beiden der drei Empfangsstellen abgegebenen Signalen, die den Sendeeinrichtungen (16, 17) am nächsten sind.

5. Vorrichtung nach Anspruch 2 oder 3, dadurch gekennzeichnet, daß die Sekundärfeld-Verhältnismittel (140, 154, 154A, 168, 170) zweite Phasendifferenzmittel umfassen zum Ableiten der Phasendifferenz zwischen denjenigen abgeleiteten Signalen, die den sekundären elektromagnetischen Feldern an denjenigen beiden der drei Stellen entsprechen, die den Sendeeinrichtungen (16, 17) am nächsten sind.

6. Vorrichtung nach Anspruch 4 oder 5, dadurch gekennzeichnet, daß die Feststellungsmittel (54, 100) Mittel (168, 170) zum Feststellen des Widerstandes und der Dielektrizitätskonstante der Erdformation in Übereinstimmung mit dem abgeleiteten Sekundärfeld-Verhältnis und den Phasendifferenzen umfassen.

7. Vorrichtung nach einem der Ansprüche 1 bis 6, dadurch gekennzeichnet, daß die Frequenz der elektromagnetischen Energie, welche von den Sendeeinrichtungen (16, 17) gesendet wird, innerhalb des Bereiches von 10 MHz bis 60 MHz liegt.

8. Bohrlochmeßverfahren zum Feststellen der Dielektrizitätskonstante und/oder des Widerstandes einer Erdformation (15) in der Nachbarschaft eines Bohrloches (13), wobei Fluid (14) von dem Bohrloch in die Erdformation eingebrochen ist, wobei das Verfahren folgendes umfaßt: Senden von elektromagnetischer Energie in die Erdformation von einer ersten Stelle in dem Bohrloch mit einer Frequenz, welche es der elektromagnetischen Energie erlaubt, die umgebende Erdformation zu durchdringen; Empfangen von elektromagnetischer Energie an mehreren Stellen in dem Bohrloch, die mit unterschiedlichen longitudinalen Distanzen weg von den Sendeeinrichtungen (16, 17) beabstandet sind, und zum Abgeben von Signalen, die der empfangenen elektromagnetischen Energie an diesen Stellen entsprechen; und Feststellen der Dielektrizitätskonstante und/oder des Widerstandes der Erdformation in Übereinstimmung mit den entsprechenden Signalen; gekennzeichnet durch: Empfangen der elektromagnetischen Energie an drei genannten Stellen und Abgeben jedes der genannten Signale, entsprechend dem gesamten elektromagnetischen Feld an den jeweiligen Stellen; und dadurch, daß der Schritt des Feststellens das Ableiten von mindestens ersten und zweiten abgeleiteten Signalen umfaßt, die jeweils den sekundären elektromagnetischen Feldern an zwei oder mehr der drei Stellen entsprechen, von den entsprechenden Signalen, welche dem gesamten elektromagnetischen Feld an diesen Stellen entsprechen, wobei die sekundären elektromagnetischen Felder von Wirbelströmen in der umgebenden Erdformation erzeugt werden, und Feststellen der Dielektrizitätskonstante und/oder des Widerstandes in Übereinstimmung mit den jeweiligen Signalen und den abgeleiteten Signalen.

9. Verfahren nach Anspruch 8, dadurch gekennzeichnet, daß der Schritt des Feststellens folgendes umfaßt: Ableiten des Verhältnisses der Größen der sekundären elektromagnetischen Felder an den zweiten und dritten Stellen; und Ableiten einer ersten Phasendifferenz zwischen den Signalen, welche von den dritten und vierten Stellen abgegeben werden.

10. Verfahren nach Anspruch 8, dadurch gekennzeichnet, daß der Schritt des Feststellens folgendes umfaßt: Ableiten des Verhältnisses der Größen der elektromagnetischen Felder an den zweiten und dritten Stellen und Ableiten einer ersten Phasendifferenz zwischen denjenigen abgeleiteten Signalen, welche den sekundären elektromagnetischen Feldern an den dritten und vierten Stellen entsprechen.

11. Verfahren nach Anspruch 9 oder 10, dadurch gekennzeichnet, daß der Schritt des Ableitens des Größenverhältnisses das Ableiten einer zweiten Phasendifferenz zwischen denjenigen Signalen umfaßt, welche von den zweiten und dritten Stellen abgegeben werden.

12. Verfahren nach Anspruch 9 oder 10, dadurch gekennzeichnet, daß der Schritt des Ableitens des Größenverhältnisses das Ableiten einer zweiten Phasendifferenz zwischen denjenigen abgeleiteten Signalen umfaßt, welche den sekundären elektromagnetischen Feldern an den zweiten und dritten Stellen entsprechen.

13. Verfahren nach Anspruch 11 oder 12, dadurch gekennzeichnet, daß der Schritt des Feststellens das Erzeugen von Signalen umfaßt, die dem Widerstand und der Dielektrizitätskonstante der Erdformation in Übereinstimmung mit dem abgeleiteten Sekundärfeld-Verhältnis und der Phasendifferenz entsprechen.

14. Verfahren nach einem der Ansprüche 8 bis 13, dadurch gekennzeichnet, daß die Sendefrequenz in dem Bereich von 10 MHz bis 60 MHz liegt.

## Revendications

1. Un dispositif pour déterminer la constante diélectrique et/ou la résistivité d'une formation terrestre (15) dans le voisinage d'un puits (13), la formation terrestre étant soumise à l'invasion du fluide (14) provenant du puits, ledit dispositif comprenant:

des moyens (16, 17) pour transmettre une énergie électromagnétique dans la formation terrestre à partir d'un premier emplacement dans le puits à une fréquence qui permet à l'énergie électromagnétique de se propager dans toute la formation terrestre qui l'entoure;

des moyens (22, 23, 24) pour recevoir l'énergie électromagnétique en divers endroits dans le puits espacés de différentes distances longitudinalement par rapport aux moyens de transmission (16, 17) et pour fournir des signaux représentatifs de l'énergie électromagnétique reçue en ces endroits; et

des moyens (54, 100) pour déterminer la constante diélectrique et/ou la résistivité de ladite formation terrestre conformèment auxdits signaux représentatifs;

caractérisé en ce que:

lesdits moyens (22, 23, 24) pour recevoir l'énergie électromagnétique comprennent lesdits trois moyens de réception et chacun desdits moyens de réception fournit son dit signal représentatif du champ électromagnétique total en son emplacement respectif; et

lesdits moyens de détermination (54, 100) fonctionnent pour dériver au moins les premier et second signaux dérivés respectivement représentatifs des champs électromagnétiques secondaires en deux ou davantage desdits trois emplacements à partir des signaux respectifs représentatifs du champ électromagnétique total en ces emplacements, ces champs électromagnétiques secondaires produits par des courants de Foucault dans la formation terrestre qui les entoure, et pour déterminer la constante diélectrique et/ou la résistivité conformément auxdits signaux représentatifs et auxdits signaux dérivés.

2. Un dispositif selon la revendication 1 caractérisé en ce que les moyens de détermination (54, 100) comprennent:

des moyens de rapport de champ secondaires (140, 154, 154A, 168, 170) pour dériver le rapport des amplitudes des champs électromagnétiques secondaires aux deux (22, 23) desdits trois emplacements de réception les plus proches des moyens de transmission (16, 17), et

un premier moyen de différence de phase (130) pour dériver la différence de phase entre lesdits signaux fournis par lesdits moyens de réception respectifs (23, 24) aux deux desdits trois emplacements les plus éloignés des moyens de transmission (16, 17).

3. Un dispositif selon la revendication 1 caractérisé en ce que les moyens de détermination (54, 100) comprennent:

des moyens de rapport de champ secondaire (140, 154, 154A, 168, 170) pour dériver le rapport des amplitudes des champs électromagnétiques secondaires aux deux (22, 23) desdits trois emplacements de réception les plus proches des moyens de transmission (16, 17), et

le premier moyen de différence de phase pour dériver la différence de phase entre les signaux dérivés représentatifs des champs électromagnétiques secondaires aux deux desdits trois emplacements les plus éloignés des moyens de transmission (16, 17).

4. Un dispositif selon la revendication 2 ou la revendication 3 caractérisé en ce que lesdits moyens de rapport de champs secondaires (140, 154, 154A, 168, 170) comprennent un second moyen de différence de phase (140) pour dériver la différence de phase entre lesdits signaux fournis par lesdits moyens de réception respectifs (22, 23) aux deux desdits trois emplacements de réception les plus proches des moyens de transmission (16, 17).

5. Un dispositif selon la revendication 2 ou la revendication 3 caractérisé en ce que les moyens de rapport de champs secondaires (140, 154, 154A, 168, 170) comprennent le second moyen de différence de phase pour dériver la différence de phase entre les signaux dérivés représentatifs des champs électromagnétiques secondaires aux deux desdits trois emplacements les plus proches des moyens de transmission (16, 17).

6. Un dispositif selon la revendication 4 ou la revendication 5 caractérisé en ce que les moyens de détermination (54, 100) comprennent les moyens (168, 170) pour déterminer la résistivité et la constante diélectrique de la formation terrestre conformément au rapport de champ secondaire dérivé et aux différences de phase.

7. Un dispositif selon l'une quelconque des revendications 1 à 6 caractérisé en ce que la fréquence de l'énergie électromagnétique transmise par lesdits moyens de transmission (16, 17) est comprise entre 10 mégahertz et 60 mégahertz.

8. Un procédé de mesure dans les puits pour déterminer la constante diélectrique et/ou la résistivité d'une formation terrestre (15) dans le voisinage d'un puits (13), la formation terrestre étant soumise à l'invasion du fluide (14) provenant du puits, ledit procédé comprenant:

le transmission de l'énergie électromagnétique dans la formation terrestre à partir d'un premier emplacement dans le puits à une fréquence qui permet à l'énergie électromagnétique de se propager dans toute la formation terrestre qui l'entoure;

la réception de l'énergie électromagnétique en divers emplacements dans le puits espacés de différentes distances longitudinalement des moyens de transmission (16, 17) et pour fournir des signaux représentatifs de l'énergie électromagnétique reçue en ces emplacements; et

la détermination de la constante diélectrique et/ou de la résistivité de ladite formation terrestre conformément auxdits signaux représentatifs;

caractérisé par:

la réception de ladite énergie électromagnétique auxdits trois emplacements et l'émission de chacun desdits signaux représentatifs du champ électromagnétique total à l'emplacement respectif; et

ladite étape de détermination comprend la dérivation d'au moins les premier et second signaux respectivement représentatifs des champs électromagnétiques secondaires en deux ou davantage desdits trois emplacements à partir des signaux respectifs représentatifs du champ électromagnétique total en ces emplacements, lesdits champs électromagnétiques secondaires produits par les courants de Foucault dans la formation terrestre qui les entoure et la détermination de la constante diélectrique et/ou de la résistivité conformément auxdits signaux représentatifs et auxdits signaux dérivés.

9. Un procédé selon la revendication 8 caractérisé en ce que l'étape de détermination comprend:

la dérivation du rapport des amplitudes des champs électromagnétiques secondaires aux deuxième et troisième emplacements, et

la dérivation d'une première différence de phase entre les signaux fournis à partir des troisième et quatrième emplacements.

10. Un procédé selon la revendication 8 caractérisé en ce que l'étape de détermination comprend:

la dérivation du rapport des amplitudes des champs électromagnétiques secondaires aux deuxième et troisième emplacements, et

la dérivation d'une première différence de phase entre les signaux dérivés représentatifs des champs électromagnétiques secondaires aux troisième et quatrième emplacements.

11. Un procédé selon la revendication 9 ou la revendication 10 caractérisé en ce que l'étape de dérivation du rapport d'amplitude comprend la dérivation d'une seconde différence de phase entre les signaux fournis à partir des deuxième et troisième emplacements.

12. Un procédé selon la revendication 9 ou la revendication 10 caractérisé en ce que l'étape de dérivation du rapport d'amplitude comprend la dérivation d'une seconde différence de phase entre les signaux dérivés représentatifs des champs électromagnétiques secondaires aux deuxième et troisième emplacements.

13. Un procédé selon la revendication 11 ou la revendication 12 caractérisé en ce que l'étape de détermination comprend l'émission de signaux représentatifs de la résistivité et de la constante diélectrique de la formation terrestre conformément au rapport de champ secondaire dérivé et aux différences de phase.

14. Un procédé selon l'une quelconque des revendications 8 à 13 caractérisé en ce que la fréquence de transmission se trouve comprise entre 10 et 60 mégahertz.

Fig.1.

A. CONVENTIONAL SYSTEM

B. SHORT RATIO LONG PHASE SYSTEM

C. SHORT SFR LONG PHASE SYSTEM

DIELECTRIC CONSTANT

$D_I$ →

Fig.2.

DIELECTRIC CONSTANT

RESISTIVITY

20 MHZ PHASE DIFFERENCE IN DEGREES

EP 0 121 360 B1

Fig. 3.

EP 0 121 360 B1